# EUROPÄISCHE PATENTSCHRIFT

(11) **EP 2 516 211 B1**
(45) Veröffentlichungstag und Bekanntmachung des Hinweises auf die Patenterteilung: **28.01.2015**
(21) Anmeldenummer: 10805671.4
(22) Anmeldetag: 20.12.2010
(51) Int. Cl.: B60Q 1/26

(54) **BELEUCHTUNGSMODUL FÜR EIN EINSATZFAHRZEUG**
LIGHTING MODULE FOR AN EMERGENCY SERVICE VEHICLE
MODULE D'ÉCLAIRAGE POUR UN VÉHICULE D'INTERVENTION

(30) Priorität: 21.12.2009 AT 20162009
(43) Veröffentlichungstag der Anmeldung: 31.10.2012
(73) Patentinhaber: Rosenbauer International Aktiengesellschaft, 4060 Leonding (AT)
(72) Erfinder: RONACHER, Alexander, A-4063 Hörsching (AT); STADLER, Bernhard, A-4143 Neustift im Mühlkreis (AT)
(74) Vertreter: Burger, Hannes
(86) Internationale Anmeldenummer: PCT/AT2010/000489
(87) Internationale Veröffentlichungsnummer: WO 2011/075756

(56) Entgegenhaltungen:
- EP-A1- 1 304 260
- EP-A2- 2 127 947
- WO-A1-95/32875
- US-A- 6 114 954
- US-A1- 2004 032 745
- US-A1- 2007 197 084
- US-A1- 2008 273 345
- US-B1- 7 241 019

## Beschreibung

Die Erfindung betrifft ein Einsatzfahrzeug mit einem Beleuchtungsmodul.

Bei Einsatzfahrzeugen, beispielsweise Fahrzeugen zur Brandbekämpfung und für technische Hilfseinsätze bzw. Fahrzeugen für den Sanitätsdienst und Krankentransport, ist es von Bedeutung, wenn am Einsatzort die Umgebung des Fahrzeugs gut ausgeleuchtet ist, um so ein sicheres Handeln der Einsatzkräfte zu gewährleisten. Da Hilfseinsätze auch bei Dunkelheit bzw. an Orten mit einer unbekannten, kleinräumigen Topographie durchgeführt werden müssen, wird durch eine entsprechende Beleuchtung die Verletzungsgefahr aufgrund nicht oder schwer erkennbarer Hindernisse wesentlich verringert. Ferner ist es von Bedeutung, wenn eine derartige Umfeldbeleuchtung mit einer entsprechend ausreichenden Helligkeit sofort bei Erreichen des Einsatzortes zur Verfügung steht, insbesondere ohne dass zur Inbetriebnahme der Beleuchtungsvorrichtung eine Einsatzkraft das Einsatzfahrzeug verlassen muss.

Da Einsatzfahrzeuge zumeist eine ausreichende Höhe aufweisen, wird eine derartige Umfeldbeleuchtung zumeist im Bereich des Dachs angebracht, da dadurch ein großer Abschnitt rund um das Einsatzfahrzeug beleuchtet werden kann. Zur Erreichung einer möglichst homogenen Ausleuchtung ist aus der EP 0 755 285 B1 die Anordnung einer Lichtquelle im Bereich der Dachkante des Einsatzfahrzeugaufbaus offenbart. Als Leuchtmittel wird eine Leuchtstoffröhre verwendet.

Auch die DE 20 2006 010 974 U1 offenbar ein Einsatzfahrzeug, bei dem im Dachaufbau, insbesondere im Bereich eines Rollladenkastens, eine Leuchtstofflampe angeordnet ist.

Aus der EP 1 609 508 B1 ist ein Einsatzfahrzeug bekannt, bei dem im Dachbereich mehrere Einzelleuchten angeordnet sind.

Aus der US 2007/0197084 A1 ist eine Signalvorrichtung bekannt, welche am Dach eines Einsatzfahrzeuges angeordnet werden kann. Die Signalvorrichtung weist ein Gehäuse mit einem verschwenkbaren Deckel auf, welches Gehäuse eine wetterbeständige, innere Kammer ausbildet, wobei Signalelemente auf der kammerinnen gelegenen Seite des Deckels angeordnet sind. Im Einsatzfall wird der Deckel aufgeschwenkt, so dass die Signalelemente sichtbar werden und zur Warnung anderer Verkehrsteilnehmer dienen.

Das Dokument US 2004/0032745 A1 offenbart ein Warnsignal, welches eine Mehrzahl von statischen Lichtsignalen und ferner ein drehendes bzw. oszillierendes Lichtsignal generieren kann, ohne dabei auf mechanische Bauteile angewiesen zu sein. Rotierende bzw. oszillierende Lichtsignale werden beispielsweise durch sequentielles Einschalten von Zeilen von Leuchtdioden auf einem stationären Element erzeugt. Ferner kann ein Reflektor um eine stationäre Lichtquelle rotieren bzw. umgekehrt die Lichtquelle um einen stationären Reflektor rotieren, wobei in Kombination einer spezifischen Ansteuerung ein pulsierendes, oszillierendes, abwechselndes Blitz- oder Stroboskoplicht erzeugt werden kann. Der Abstrahlwinkel der eingesetzten Leuchtdioden ist derart gewählt, dass durch den Reflektor ein entsprechender Abstrahlwinkel erreicht wird, so dass die Hauptstrahlrichtung direkt in Blickrichtung eines Passanten liegt, wodurch eine besonders hohe Wahrnehmbarkeit gegeben ist. Ferner ist ein Lichtbalken offenbart, welcher sich von der Fahrer- zur Beifahrerseite erstreckt und dabei ein blaues Drehlicht sowie ein oszillierendes weißes Licht simuliert.

Das Dokument WO 95/32875 A1 offenbart ein Einsatzfahrzeug mit einer Beleuchtungseinrichtung, wobei die Beleuchtungsvorrichtung in der Übergangszone zwischen der Seitenwand und dem Dach angeordnet ist. Die Beleuchtungsvorrichtung weist als Leuchtmittel eine Leuchtstofflampe auf, welche ihr Licht über einen Reflektor in den Seitenbereich neben das Fahrzeug und zusätzlich über ein Lichtfenster im Reflektor, auf den Dachbereich des Fensters lenkt. Ein Teil des Lichtes der Leuchtstoffröhre dringt direkt über Lichtdurchtrittsöffnungen auf die Dachoberfläche, wobei die Lichtdurchtrittsöffnungen zur Dachfläche bedeutend kleiner ausgeführt sind als die Lichtdurchtrittsöffnungen zur Seitenwand, um so die Reflektorfläche nicht allzu sehr zu verringern und nicht unnötig viel Licht zur Beleuchtung des Dachbereiches von der Beleuchtung der Arbeitsbereiche abzuzweigen.

Das Dokument US 6,114,954 A offenbart einen Dachträger mit einer Beleuchtungsvorrichtung, insbesondere mit Abbiegeanzeigern sowie Beleuchtungseinrichtungen zur Erhöhung der Aufmerksamkeit und der Sicherheit. Seitenführungen in der Art einer Schiene sorgen für die Reduktion bzw. Verteilung der Last auf das Dach, um somit eine Beschädigung des dünnen Dachblechs eines Fahrzeugs zu vermeiden. Insbesondere weist der Gepäckträger eine Brems leuchte auf, welche in einen zweiten Querträger eingebaut ist und somit auch dann sichtbar ist, wenn der Gepäckträger mit Gepäck beladen ist..

Aus der DE 41 23 136 A1 ist eine Umfeldbeleuchtung eines Einsatzfahrzeugs offenbart, bei dem eine Leuchtstoffröhre im Bereich des Rollladenkastens angeordnet ist, und durch den heruntergelassenen Rollladen abgedeckt ist. Um das Umfeld des Einsatzfahrzeugs zu beleuchten, muss hier der Rollladen hochgezogen werden.

Das Dokument EP 2 127 947 A2 offenbart eine Beleuchtungsvorrichtung für ein Fahrzeug, insbesondere für die Beleuchtung des rückseitigen Kennzeichens eines Fahrzeugs. Die Beleuchtungsvorrichtung ist dabei am oberen Rand des Kennzeichens angeordnet und beleuchtet das Kennzeichen mit sichtbarem Licht, und die Region hinter dem Fahrzeug mit infrarotem Licht. Aus rückwärtiger Ansicht befindet sich die Lampe zur Beleuchtung des Kennzeichens direkt oberhalb der infraroten Beleuchtungslampe. Durch die Anordnung der beiden Lampen im oberen Endbereich des Kennzeichens wird erreicht, dass die Infrarotlampe trotz ihrer leicht rötlichen Lichtabgabe, von nachfolgenden Verkehrsteilnehmern nicht als störend wahrgenommen wird. Die Infrarotlampe dient dazu, einen Bereich hinter dem Fahrzeug zu beleuchten, welcher Bereich von Infrarotkameras aufgenommen und an einem Monitor dargestellt wird. Somit kann der Fahrer, insbesondere ein automatisiertes Fahrsystem, Straßenmarkierungen erkennen. Das sichtbare Licht des ersten Leuchtmittels ist nach unten auf das Kennzeichen gerichtet, um dieses diffus zu beleuchten. Das Licht der Infrarotlampe wird über einen zweiten Reflektor in Richtung der Straße hinter dem Fahrzeug gelenkt..

Dokument US 7,241,019 B1 offenbart ein reflektierendes Rücklicht für einen Lastkraftwagen, welches unter anderem eine Leuchtbasis und eine Schaltkreisbasis aufweist, wobei auf der Schaltkreisbasis, unterteilt in Abschnitte, eine Mehrzahl von Leuchtdioden angeordnet ist. Die einzelnen Abschnitte sind dabei in unterschiedliche Richtungen ausgerichtet angeordnet. Von der Schaltkreisbasis werden die Leuchtdioden der einzelnen Sektionen angesteuert, um so in die jeweilige Sektion Licht abzugeben.

Das Dokument US 2008/0273345 A1 offenbart eine Lampe für Fahrzeuge, wobei der Lampe gegenüberliegend ein erster Reflektor angeordnet ist. In der Ebene der Lampe ist ein zweiter Reflektor angeordnet, welcher das vom ersten Reflektor ausgehende Licht reflektiert. Der erste und zweite Reflektor sind dabei integriert angeordnet, wobei im zweiten Reflektor, dem ersten Reflektor gegenüberliegend, ein Schlitz ausgebildet ist, in welchem Schlitz das Leuchtmittel angeordnet ist. Der zweite Reflektor hat eine reflektierende Oberfläche in der Form eines Paraboloids, wobei der Schlitz diesen zweiten Reflektor in zwei Teile teilt. Der Schlitz ist hinsichtlich seiner Breite und Länge derart ausgebildet, dass er beinahe zur Gänze vom ersten Reflektor überdeckt wird, und somit bei Betrachtung von vorne nicht zu sehen ist.

Das Dokument EP 1 304 260 A1 offenbart einen Rückspiegel für ein- oder mehrspurige Fahrzeuge, mit einer Mehrzahl von austauschbaren Signaleinheiten. Das Dokument offenbart insbesondere einen Seitenspiegel in einer Anti-Diebstahlsausführung, welcher ohne sichtbare Schrauben vom Inneren des Fahrzeugs montiert werden kann. Ferner soll dieser Außenspiegel einfach herstellbar und widerstandsfähig gegen Vandalismus, Schläge und Kratzer sein.

Einzelleuchten haben nun den Nachteil, dass zur Erzielung einer entsprechenden Beleuchtungsstärke im Ausleuchtbereich, die einzelnen Leuchten eine entsprechend hohe Lichtabgabeleistung aufweisen müssen, wodurch die Gefahr einer Blendung der Einsatzkräfte gegeben ist. Einzelleuchten, insbesondere wenn sie am Dach angeordnet sind, haben ferner den Nachteil, dass sie das Einsatzfahrzeug überragen und somit ein besonders hohes Beschädigungsrisiko gegeben ist. Leuchtstofflampen haben wiederum den Nachteil, dass der abgegebene Lichtstrom nach dem Einschalten der Leuchte sehr gering ist und erst nach einer entsprechenden Betriebsdauer, und der damit verbundenen Erwärmung der Lampe, das gewünschte Niveau erreicht, was insbesondere bei Einsätzen mit niedrigen Außentemperaturen von besonderem Nachteil ist. Ferner weisen Leuchtstofflampen ein bauteilbedingtes Volumen auf, welches zusammen mit der erforderlichen Ansteuerschaltung im Rahmen des Fahrzeugs untergebracht werden muss. Thermische Strahler, Gasentladungslampen und Lichtbogenlampen haben ferner den Nachteil, dass sie aufgrund ihrer Bauart und des Wirkprinzips anfällig auf Vibrationen und Schläge sind. Daher sind ggf. aufwändige Dämpfungslösungen erforderlich, um die mechanischen Belastungen, wie sie beim Betrieb des Einsatzfahrzeuges auftreten können, vom Leuchtmittel abzuwenden. Beispielsweise kommt es durch einen unter Last laufenden Verbrennungskraftmotor, zum Betrieb einer Hochdruck-Wasserpumpe eines Feuerwehrfahrzeugs, zu starken Vibrationen des Fahrzeugs, welche auch direkt auf die Leuchtmittel wirken und somit zu einem erhöhten Verschleiß führen. Dadurch kommt es zu einer Reduktion der nutzbaren Einsatzdauer der Leuchtmittel und insbesondere besteht die Gefahr, dass das Leuchtmittel im Einsatzfall ausfällt.

Da zumeist auch eine Beleuchtung des Dachbereichs des Einsatzfahrzeugs vorteilhaft ist, beispielsweise da dort zusätzliche Einsatzmittel angeordnet sind, offenbart der Stand der Technik, dass ein Teil des vom Leuchtmittel abgegebenen Lichts auf den Dachbereich gelenkt wird. Dies ist jedoch dahingehend von Nachteil, da die Hauptstrahlungsleistung des Leuchtmittels auf das Umfeld gelenkt werden sollte, da im Dachbereich nur eine geringere Beleuchtungsstärke erforderlich ist und auch die zu beleuchtende Fläche geringer ist. Diese Umlenkung ist einerseits aufwändig zu gestalten und ferner geht dadurch ein Teil des vom Leuchtmittel abgegebenen Lichtstroms für die Umfeldbeleuchtung verloren.

Die Aufgabe der Erfindung liegt also darin, eine kompakte Beleuchtungsvorrichtung zu schaffen, welche einen Umgebungsbereich eines Einsatzfahrzeuges und den Dachabschnitt des Einsatzfahrzeuges blendfrei beleuchtet und wobei insbesondere die Beleuchtungsstärke im Ausleuchtbereich von der Einschaltdauer und Umgebungstemperatur unabhängig ist. Die Aufgabe der Erfindung wird durch die Merkmale des Anspruchs 1 gelöst.

Die Anordnung der Leuchtmodule in einem ersten und zweiten Aufnahmebereich hat den Vorteil, dass die Aufnahmebereiche jeweils optimal auf den zu beleuchtenden Abschnitt ausgelegt werden können. Das erfindungsgemäße Beleuchtungsmodul wird bevorzugt möglichst hoch am Fahrzeug und im Bezug auf die Breite des Fahrzeugs, möglichst weit außen angebracht, um somit einerseits eine möglichst gute Ausgangsposition für die Umgebungsbeleuchtung und ferner eine möglichst geringe Einschränkung der nutzbaren Dachfläche zu gewährleisten. Insbesondere ist mit dem erfindungsgemäßen Beleuchtungsmodul eine Anpassung der Strahlungsleistung zur Beleuchtung des ersten und zweiten Raumabschnitts individuell möglich, ohne dafür die Strahlungsleistung einer einzigen Lichtquelle entsprechend umlenken zu müssen, wie dies der Stand der Technik zeigt, wobei dabei stets ein Teil der abgegebenen Strahlungsleistung aufgrund der erforderlichen Kompromisslösung bei der Anordnung des Leuchtmittels verloren geht.

Das Halbleiterbauteil des ersten und/oder zweiten Leuchtelements ist bevorzugt durch eine Leuchtdiode (LED) gebildet, wobei sowohl organische als auch anorganische Leuchtdioden verwendet werden können. Leuchtdioden haben den besonderen Vorteil, dass sie sehr kompakt ausgebildet sind und somit in einem kleinen Volumen eine sehr hohe Lichtleistung bereitstellen können. Insbesondere ist der Wirkungsgrad gegenüber thermischen Strahlungsquellen, beispielsweise Halogenglühlampen, deutlich größer, ferner ist der schaltungstechnische Ansteuerungsaufwand im Vergleich zu Gasentladungslampen bzw. Lichtbogenlampen deutlich reduziert, ggf. kann die Ansteuerungsschaltung im Halbleiterbauteil integriert sein. Von besonderem Vorteil ist jedoch, dass LED's unmittelbar nach dem Einschalten ihre volle Leuchtkraft entwickeln und die abgegebene Strahlungsleistung im Wesentlichen nicht von der Umgebungstemperatur abhängt. Ein weiterer Vorteil liegt darin, dass Leuchtdioden eine im Wesentlichen punktförmige Lichtquelle darstellen, was insbesondere für die Erzielung eines entsprechenden Beleuchtungsprofils der Umgebungsbeleuchtung von Vorteil ist.

Halbleiterbauteile haben ferner den Vorteil, dass sie auch elektromagnetische Strahlung im nicht sichtbaren Bereich abgeben können, bspw. im UV-Bereich, wodurch fluoreszierende Sicherheitsreflektoren an der Kleidung der Einsatzkräfte zum Leuchten angeregt werden und so eine deutliche Verbesserung der Sichtbarkeit gegeben ist. Auch kann mit Halbleiterbauteilen die Wellenlänge der abgegebenen elektromagnetischen Strahlung in weiten Bereichen eingestellt werden, so dass anlassbezogen, bspw. bei starkem Rauch oder starkem Nebel, eine Lichtfarbe abgegeben wird, die vom menschlichen Auge besser wahrgenommen wird und somit dennoch eine ausreichende Beleuchtung gegeben ist. Ein weiterer Vorteil von Halbleiterbauteilen liegt darin, dass die abgegebene elektromagnetische Strahlung derart gewählt werden kann, dass ein korrektes Farbempfinden für die Einsatzkräfte gegeben ist, was insbesondere bei Gasentladungslampen bzw. Bogenlampen nur mit deutlichem Zusatzaufwand erreicht werden kann. Beispielsweise ist ein korrektes Farbempfinden von besonderer Bedeutung, wenn im Einsatzfall Gefahrengutschilder, Sicherheitsreflektoren oder farbige Kennzeichnungen von Leitungen erkannt werden sollen. Diese sind zumeist mit einer Signalfarbe gekennzeichnet, wobei die Signalwirkung der Farbe bei Beleuchtung mit dem Licht einer Gasentladungslampe ggf. verloren gehen kann.

Die Erfindung nach der das erste Leuchtmodul zumindest zwei erste Leuchtelemente aufweist, hat den Vorteil, dass die zur Erreichung einer entsprechenden Beleuchtungsstärke im ersten Raumabschnitt erforderliche Strahlungsleistung des Leuchtmoduls von zwei Leuchtelementen übernommen werden kann, wobei eine Ausbildung mit drei Leuchtelementen bevorzugt ist, sodass jedes der ersten Leuchtelemente eine geringere Einzelhelligkeit aufweist, was insbesondere für eine Reduktion der Blendwirkung von Vorteil ist. Aufgrund der kompakten Ausbildung und der im Wesentlichen punktförmigen Lichtquelle ist mit einer individuellen Positionierung der Leuchtelemente eine besonders gute und insbesondere homogene Ausleuchtung des ersten Raumabschnitts möglich, da sich Lichtlenkelemente für punktförmige Lichtquellen besonders gut optimieren lassen.

Zur Erzielung einer möglichst gleichmäßigen Beleuchtung des ersten Raumabschnitts ist nach dem die Maxima der von den ersten Leuchtelementen abgegebenen, elektromagnetischen Strahlung zueinander nicht parallel sind, also dass die Hauptstrahlrichtungen der einzelnen, ersten Leuchtelemente einen Winkel zueinander einschließen. Durch entsprechende Ausbildung der Tragstruktur sind die einzelnen ersten Leuchtelemente gezielt ausgerichtet, sodass jedes einzelne, erste Leuchtelement einen Teilabschnitt des ersten Raumabschnitts beleuchtet, bevorzugt wird dieser Winkel im Bereich zwischen 5 und 25° liegen, wobei gemäß einer Weiterbildung mit drei ersten Leuchtelementen, der Winkel zwischen den profilteilnahen Hauptstrahlrichtungen und den profilteilfernen Hauptstrahlrichtungen abnimmt.

Zur Erzielung einer möglichst guten Ausleuchtung des Raumabschnitts ist es von Vorteil, wenn das jeweilige Leuchtmodul möglichst hoch über dem zu beleuchtenden Abschnitt angeordnet ist. Für den ersten Raumabschnitt und das erste Leuchtmodul ist dies aufgrund der Bauhöhe des Fahrzeugs bereits gegeben. Für das zweite Leuchtmodul, welches den Dachabschnitt als zweiten Raumabschnitt beleuchtet, ist es daher von Vorteil, wenn das zweite Leuchtmodul in einem oberen Randabschnitt des Profilteils angeordnet ist, da somit wiederum ohne aufwändige Lichtlenkung eine gute Ausleuchtung des zweiten Raumabschnitts gewährleistet ist.

Jedes erste Leuchtelement gibt seine elektromagnetische Strahlung in einen Raumabschnitt ab, wobei das Maximum in eine Hauptstrahlrichtung abgegeben wird. Je weiter ein abgegebener Lichtstrahl von der Hauptstrahlrichtung abweicht, desto größer ist die Gefahr, dass dieser Lichtstrahl für die Beleuchtung des ersten Raumabschnitts verloren ist. Daher ist es von Vorteil, wenn die Tragstruktur zumindest abschnittsweise reflektierend ausgebildet ist, da somit von der Hauptstrahlrichtung abweichende Lichtstrahlen gezielt umgelenkt werden können und wieder einen Beitrag in Richtung der Hauptstrahlrichtung ergeben. Bei einer bevorzugten Ausbildung der Halbleiterbauteile beträgt der Öffnungswinkel des im Wesentlichen symmetrischen Abstrahlkegels der abgegebenen elektromagnetischen Strahlung 120°. Dieser Abstrahlwinkel ist jedoch nur beispielhaft zu verstehen, in Weiterbildungen kann die Abstrahlcharakteristik des Leuchtelements jedoch auch bspw. Halbkugelförmig ausgebildet sein, bzw. sind auch stärker gerichtete Abstrahlcharakteristiken mit einem geringen Öffnungswinkel möglich.

Von Vorteil ist ferner, wenn das Abdeckelement als Lichtlenkelement ausgebildet ist, da somit Lichtstrahlen der ersten Leuchtelemente, die im Wesentlichen nicht in Richtung der Hauptstrahlrichtung abgegeben werden, in Richtung der Hauptstrahlrichtung umgelenkt werden können und somit zur Erhöhung der Beleuchtungsdichte im ersten Raumabschnitt beitragen und dadurch den lichttechnischen Wirkungsgrad des Beleuchtungsmoduls erhöhen. Das Abdeckelement kann beispielsweise als Prismenscheibe ausgebildet sein, um so einen einfallenden Lichtstrahl in eine von der Einfallsrichtung unterschiedliche zweite Richtung abzulenken. Beispielsweise kann das Lichtlenkelement eine Mikrostrukturierung aufweisen, die eine derartige Lichtlenkung bewirkt. Diese Ausbildung hat ferner den Vorteil, dass das Lichtlenkelement auch als eine Art Diffusor fungiert und somit eine Blendwirkung reduziert wird.

Bei einem Einsatzfahrzeug ist es von Bedeutung, die nahe Umgebung um das Fahrzeuge auszuleuchten, ohne dabei die Einsatzkräfte zu blenden. Da das erfindungsgemäße Beleuchtungsmodul im Bereich des Dachs des Einsatzfahrzeuges angeordnet ist, wird durch entsprechende Anordnung der Leuchtelemente des ersten Leuchtmoduls der erste Raumabschnitt derart beleuchtet, dass im Bezug zu einer Horizontalen auf das Profilteil bzw. das Einsatzfahrzeug, der profilteilnahe Hauptstrahl die Horizontale in einem Winkel zwischen 50° und 65° schneidet und der profilteilferne Hauptstrahl die Horizontale in einem Winkel zwischen 10° und 30° schneidet. Bei einer Fahrzeughöhe von bspw. 3 m trifft der profilteilnahe Hauptstrahl in einem Abstand von ca. 2 m und der profilteilferne Hauptstrahl in einem Abstand von 6 m, jeweils relativ zur Normalen auf das Beleuchtungsmodul, auf die Grundfläche auf.

Da das erfindungsgemäße Beleuchtungsmodul im Außenbereich eines Einsatzfahrzeuges angeordnet ist und somit den Witterungseinflüssen und insbesondere den Belastungen aufgrund der mit dem Einsatzfahrzeug durchzuführenden Einsatzleistung ausgesetzt ist, ist es von Vorteil, wenn das Abdeckelement einfach und schnell austauschbar ist. Daher ist gemäß einer Weiterbildung das Abdeckelement mit einer Klemmverbindung und ferner einem Klemmmittel mit dem Profilteil verbunden, wodurch insbesondere ein einfacher Austausch des Abdeckelements sicher gestellt ist. Die Klemmverbindung und das Klemmmittel können ferner ein Dichtelement aufweisen bzw. als Dichtelement ausgebildet sein, so dass auch eine flüssigkeitsdichte Ausbildung des Abdeckelements möglich ist.

Eine Weiterbildung nach der das erste und/oder zweite Leuchtelement streifenförmig ausgebildet ist, hat den Vorteil, dass einerseits eine besonders einfache Anordnung des Leuchtelements am bzw. im Leuchtmodul möglich ist und dass somit wiederum die Strahlungsintensität je Abschnitt ausreichend niedrig gehalten werden kann, um dadurch eine Blendwirkung zu vermeiden, insgesamt jedoch wiederum eine ausreichend hohe Strahlungsintensität abgegeben wird um im ersten und zweiten Raumabschnitt eine entsprechende Beleuchtungsstärke zu erreichen. Beispielsweise kann ein derartiges Leuchtelement durch aneinander angereihte Leuchtdioden, insbesondere als LED-Streifenarray, gebildet werden, es ist jedoch auch eine Ausbildung als Elektrolumineszenzbauteil möglich.

Von Vorteil ist ferner eine Ausbildung, nach der das Profilteil in einem unteren Abschnitt eine nutförmige Aufnahmevorrichtung für ein plattenförmiges Bauteil aufweist. Da das erfindungsgemäße Beleuchtungsmodul bevorzugt am Übergang zwischen der Seitenwand und dem Dachbereich eines Einsatzfahrzeuges angeordnet ist, ist es von Vorteil, wenn Anbauteile, beispielsweise eine Dachtragplatte, ohne zusätzliche Befestigungsvorrichtungen direkt am Beleuchtungsmodul angeordnet werden können, da somit ein besonders kompakter Aufbau möglich ist. Bei den äußeren Abmessungen eines Einsatzfahrzeuges sind einerseits die Vorschriften der Straßenverkehrsordnung zu berücksichtigen, ferner ist jedoch erwünscht, möglichst viele Einsatzgeräte im zur Verfügung stehenden Volumen unterzubringen. Daher ist es von Vorteil, wenn die einzelnen Komponenten, insbesondere das erfindungsgemäße Beleuchtungsmodul, derart ausgebildet sind, dass sie auch Verbindungs- und insbesondere Tragfunktionalität übernehmen können. Die Dachtragplatte wird nun beispielsweise in die Aufnahme- - vorrichtung eingeschoben und von einer Klemmnase in der entsprechenden Position gehalten. Insbesondere wird dadurch auch eine Abdichtung der Dachtragplatte gegen den Aufsatzkasten erreicht.

Dahingehend ist auch eine Weiterbildung von Vorteil, nach der das Profilteil im unteren Abschnitt einen Montageabschnitt mit zumindest einem Befestigungsmittel aufweist, da dadurch das Beleuchtungsmodul mit dem Rahmengestell des Aufsatzkasten verbunden werden kann und somit wiederum eine Trag- und Montagefunktionalität übernehmen kann. Insbesondere kann dadurch die auf die Dachtragplatte einwirkende Kraft gut auf die Rahmenkonstruktion des Aufsatzkastens des Einsatzfahrzeugs abgeleitet werden.

Eine Weiterbildung nach der das Profilteil als extrudiertes Hohlkammerprofil ausgebildet ist, hat den Vorteil, dass derartige Profile sehr schnell und insbesondere kostengünstig hergestellt werden können. Bei der Gestaltung des Hohlkammerprofils kann nun insbesondere eine hohe mechanische Festigkeit bei gleichzeitig geringem Materialverbrauch und damit geringem Gewicht erreicht werden, wobei ferner in den Hohlkammern Versorgungsleitungen angeordnet werden können, die aufgrund der vorhandenen Kammertrennwände gegeneinander geschützt angeordnet sind. In Weiterbildungen sind aber auch Kantteile aus einem metallischen Blechmaterial möglich, ferner können auch Kunststoffformteile als Profilteil verwendet werden.

Nach einer Weiterbildung weist das Profilteil eine Aufnahme für ein verschwenkbares Sicherheitselement auf. Im Einsatzfall kann es vorkommen, dass sich Einsatzpersonal am Dach aufhält, wobei unter Einsatzbedingungen eine Gefährdung des Personals gegeben ist. Aufgrund einer ggf. vorhandenen Sichtbehinderung durch Rauch bzw. aufgrund der Geschwindigkeit der Einsatzhandlungen besteht die Gefahr, dass eine Einsatzkraft über die Dachbegrenzung hinaussteigt und vom Einsatzfahrzeug fällt. Ein verschwenkbares Sicherheitselement kann bspw. als ausklappbares Geländer welches im Ruhezustand in einer Aufnahme am bzw. im Profilteil angeordnet ist und somit die Bauhöhe nicht wesentlich beeinträchtigt. Im Einsatzfall wird das Sicherheitselement ausgeklappt und sorgt so für eine entsprechende Begrenzung des Dachbereichs. Das Sicherheitselement kann insbesondere derart ausgebildet sein, dass es gängigen länderspezifischen und internationalen Sicherheitsanforderungen für Einsatzfahrzeuge genügt, beispielsweise der EN 1842/2 und den Vorschriften der ICAO für Einsatzfahrzeuge im Flughafenbereich.

In einer Weiterbildung kann das Profilteil ferner eine Aufnahmevorrichtung für ein Abdeckelement aufweisen, wodurch verschiedene Aufbauteile am Profilteil angebracht werden können. Beispielsweise können im Einsatzfall Design- oder Funktionselemente angeordnet werden, wie bspw. Hinweistafeln oder Warnschilder. Auch kann eine wahlfreie Überhöhung des Dachbereichs möglich sein, um so mehr Gerätschaften am Dach stapeln zu können. Eine denkbare Ausbildung des Abdeckelements ist auch ein Sichtschutz, um den Dachabschnitt gegen die Umgebung abzuschotten.

Zum besseren Verständnis der Erfindung wird diese anhand der nachfolgenden Figuren näher erläutert.

Es zeigen jeweils in stark schematisch vereinfachter Darstellung:
- Fig. 1: eine vereinfachte Prinzipdarstellung des erfindungsgemäßen Beleuchtungsmoduls;
- Fig. 2: eine bevorzugte Ausführung des erfindungsgemäßen Beleuchtungsmoduls;
- Fig. 3: eine Darstellung der Beleuchtungsverhältnisse bei einem Einsatzfahrzeug mit dem erfindungsgemäßen Beleuchtungsmodul.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

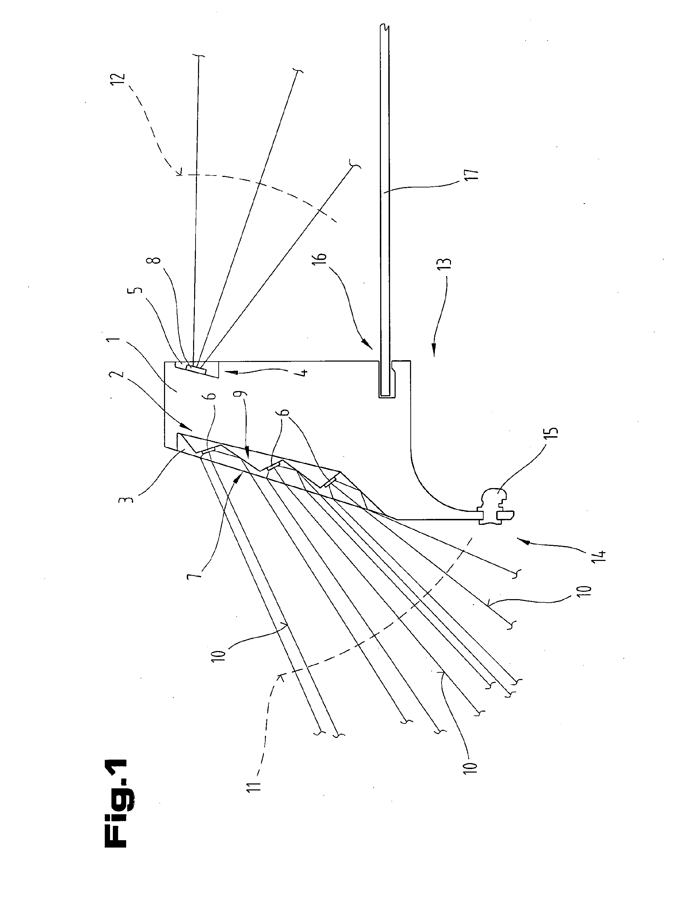

Fig. 1 zeigt eine vereinfachte Darstellung des erfindungsgemäßen Beleuchtungsmoduls 1, bei dem in einem ersten Aufnahmebereich 2 ein erstes Leuchtmodul 3 und in einem zweiten Aufnahmebereich 4 ein zweites Leuchtmodul 5 angeordnet ist. Das erste Leuchtmodul weist ferner erste Leuchtelemente 6 aus einem Halbleiterbauteil auf, ferner ist ein Abdeckelement 7 vorhanden, welches das erste Leuchtmodul 3 gegen die Umgebung abschottet. Das erste Leuchtmodul 3 weist ferner eine Tragstruktur 9 auf, auf der die ersten Leuchtelemente 6 angeordnet sind, wobei aufgrund einer gegeneinander versetzten Anordnung der ersten Leuchtelemente 6 und insbesondere einer gegeneinander unterschiedlich geneigten Anordnung, die Hauptstrahlrichtungen 10 der einzelnen ersten Leuchtelemente 6 nicht parallel ausgerichtet sind, so dass vom ersten Leuchtmodul 3 ein erster Raumabschnitt 11 beleuchtet wird. Das zweite Leuchtmodul 5 weist ein zweites Leuchtelement 8 aus einem Halbleiterbauteil auf. Da das erfindungsgemäße Beleuchtungsmodul 1 im Dachbereich eines Einsatzfahrzeuges angeordnet ist, entspricht der erste Raumabschnitt 11 der nahen Umgebung um eine Außenseite des Einsatzfahrzeugs. Da bei einem Einsatzfahrzeug auch am Dach Gerätschaften angeordnet sein können bzw. das Dach begehbar ausgebildet ist, beleuchtet das zweite Leuchtmodul 5 einen zweiten Raumabschnitt 12, welcher bevorzugt einem Teil des Dachbereichs des Einsatzfahrzeuges entspricht.

Der Vorteil des erfindungsgemäßen Beleuchtungsmoduls 1 liegt nun darin, dass die beiden Leuchtmodule optimal an den jeweiligen Einsatzzweck ausgebildet werden können, insbesondere ist mit den ersten Leuchtelementen 6 des ersten Leuchtmoduls 3, in Kombination mit der Ausbildung der Tragstruktur 9, eine entsprechend gute Ausleuchtung des Umgebungsbereichs eines Einsatzfahrzeugs möglich, ohne dabei die Einsatzkräfte durch eine zu hohe Einzelhelligkeit der ersten Leuchtelemente bzw. des ersten Leuchtmoduls zu blenden. Gleichzeitig ist eine Beleuchtung des Dachbereichs möglich, ohne dass dafür eine Strahlung des ersten Beleuchtungsmoduls umgelenkt werden muss und somit nicht für die Beleuchtung des ersten Raumabschnitts zur Verfügung steht. Ferner ist aufgrund der geringeren zu beleuchtenden Fläche im Dachbereich zumeist auch eine geringere Strahlungsleistung des zweiten Leuchtmoduls erforderlich, wobei wiederum von Vorteil ist, dass das erste 3 und zweite 5 Leuchtmodul unabhängig voneinander auf den jeweiligen Einsatzfall optimiert ausgelegt werden können. Insbesondere ist jedoch von Vorteil, dass die erfindungsgemäße Ausbildung der ersten 6 und zweiten 8 Leuchtelemente als Halbleiterbauteile eine sehr hohe Lichtleistung bei einem gleichzeitig sehr geringem Bauteilvolumen ermöglicht und ferner ist die abgegebene Lichtleistung im Gegensatz beispielsweise zu bekannten Leuchtstoffröhren nicht von der Umgebungstemperatur und der Einschaltdauer abhängig, so dass sofort nach dem Einschalten die volle Helligkeit zur Verfügung steht. Auch ist ein Halbleiterbauteil im Gegensatz zu thermischen Strahlen, bspw. Halogenglühlampen, Gasentladungs- oder Lichtbogenlampen im Wesentlichen nicht erschütterungsempfindlich. Aus energetischer Sicht haben Halbleiterbauteile einen weiteren besonderen Vorteil, dass die Leistungsaufnahme zur Erreichung einer vergleichbaren Lichtabgabeleistung deutlich geringer ist, als bei bekannten Leuchtmitteln und somit ein deutlich besserer Wirkungsgrad erreicht wird. Bei einem mobilen Einsatzfahrzeug muss die elektrische Energie zum Betrieb des Leuchtmoduls vor Ort erzeugt werden, zumeist vom Verbrennungskraftmotor des Fahrzeugs bzw. einem zusätzlichen Generator. Da die zur Verfügung stehende elektrische Energie begrenzt ist, haben Leuchtelemente mit einem höheren elektrischen Wirkungsgrad jedenfalls bedeutende Vorteile.

Bevorzugt ist das Profilteil des Beleuchtungsmoduls 1 derart strukturiert ausgebildet, dass das gesamte Beleuchtungsmodul auch statisch tragende Aufgaben übernehmen kann und somit ein Konstruktionsteil des Aufsatzkastens des Einsatzfahrzeugs bilden kann. Dazu ist bevorzugt in einem unteren Abschnitt 13 ein Montageabschnitt 14 vorgesehen, welcher über ein Befestigungsmittel das Profilteil 18 mit einem Rahmenkonstruktionsteil verbindet und somit einen Teil der äußeren Fahrzeughülle bildet. In diesem Abschnitt 13 kann auch ein Dichtungselement 14 vorhanden sein, um das Profilteil mit dem in diesem Bereich angeordneten und über eine Führung abrollenden Rollladen gegenüber der Umgebung abzudichten. Ebenfalls im unteren Abschnitt 13 ist eine Aufnahmevorrichtung 16 vorgesehen, die bevorzugt nutförmig ausgebildet ist und eine Klemmnase aufweist, wobei in der Aufnahmevorrichtung 16 eine Dachtragplatte 17 angeordnet wird, wodurch wiederum Konstruktions- und Montagevorrichtungen eingespart werden können, da die Dachtragplatte direkt vom Beleuchtungsmodul 1, insbesondere vom Profilteil 18 aufgenommen und gehalten wird.

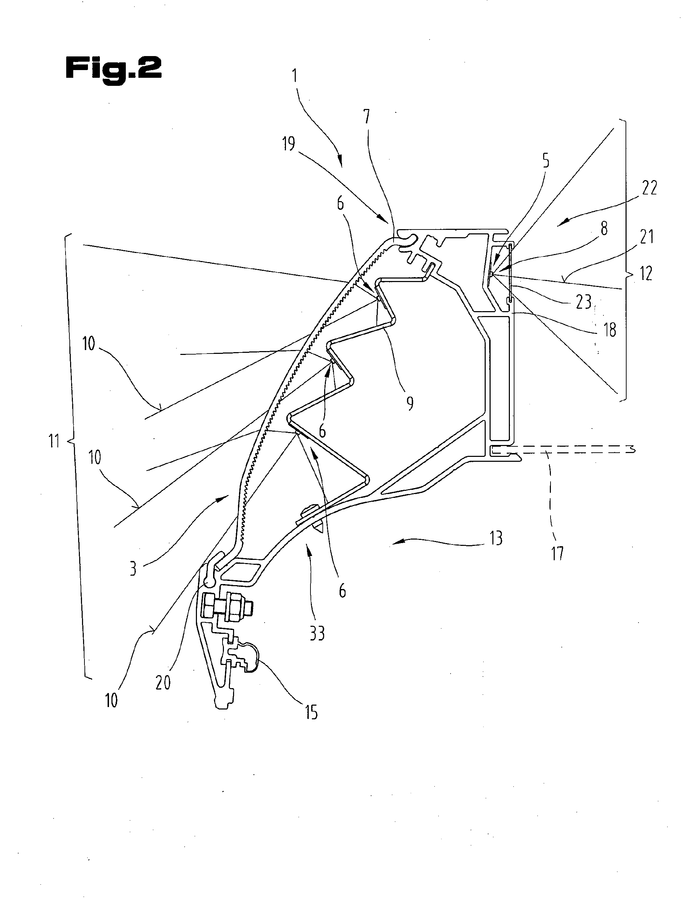

Fig. 2 zeigt einen Querschnitt durch eine bevorzugte Ausbildung des erfindungsgemäßen Beleuchtungsmoduls 1. Deutlich zu erkennen ist die Strukturierung des Profilteils 18, wobei durch die Bildung der einzelnen Kammern bzw. Versteifungs- und Verstrebungsstege ein kompaktes, selbsttragendes und verwindungsarmes Bauteil entsteht, welches bei geringem Gewicht und kompakten Abmessungen ausreichend Stabilität bietet, eine funktionale Komponente des Aufsatzkastens des Einsatzfahrzeugs zu bilden.

Die Tragstruktur 9 zur Aufnahme der ersten Leuchtelemente 6 ist bevorzugt meanderförmig ausgebildet, was den Vorteil hat, dass mit der in der Figur angedeuteten Leuchtcharakteristik der einzelnen ersten Leuchtelemente 6, eine positive Überlagerung der Teilbeträge der von den einzelnen Leuchtelementen 6 abgegebenen elektromagnetischen Strahlung zur Ausleuchtung des ersten Raumabschnitts 11 gegeben ist. Da jedes erste Leuchtelement 6 die erzeugte elektromagnetische Strahlung nicht nur in die Hauptstrahlrichtung 10 abgibt, sondern beispielsweise in einen Kegel mit 120° Öffnungswinkel, kann mittels einer zumindest abschnittsweise reflektierend ausgebildeten Tragstruktur 9 die Verteilung der abgegebenen elektromagnetisch Strahlung dahingehend beeinflusst werden, dass elektromagnetische Strahlung, welche nicht in die gewünschte Vorzugsrichtung abgegeben wird, durch die reflektierenden Abschnitte der Tragstruktur 9 in Richtung der Hauptstrahlrichtung umgelenkt wird, um somit den Wirkungsgrad zu erhöhen und insbesondere im ersten Raumabschnitt 11 eine höhere Beleuchtungsstärke zu erreichen.

Diesbezüglich ist eine Weiterbildung von Vorteil, nach der das Abdeckelement 7 als Lichtlenkelement ausgebildet ist, und somit wiederum Lichtstrahlen, die nicht in einer bevorzugten Hauptstrahlrichtung auf das Abdeckelement 7 auftreffen, in Richtung der Hauptstrahlrichtung ablenkt. Beispielsweise kann das Abdeckelement 7 als Mikroprismenarray gebildet sein, eine derartige Lichtlenkung ist jedoch auch mit einer Strukturierung, beispielsweise mittels eines Sägezahnprofils, möglich. Durch das Abdeckelement 7 wird jedoch insbesondere erreicht, dass möglichst viel so genanntes Streulicht in Richtung des ersten Raumabschnitts 11 gelenkt wird, was wiederum den gesamten Wirkungsgrad des Beleuchtungsmoduls 1 erhöht, da weniger erzeugte elektrische Lichtleistung verloren geht und somit eine höhere Lichtausbeute gegeben ist. Von Vorteil ist ferner, dass durch ein derartiges Abdeckelement eine Blendwirkung des Einsatzpersonals reduziert bzw. vermindert wird, da die im Wesentlichen punktförmige Lichtquelle eines Halbleiterbauteils und die damit verbundene, entsprechend hohe Helligkeit dieses Leuchtpunkts, auf einen größeren Bereich aufgeweitet wird.

Aufgrund der herrschenden Bedingungen bei einem Einsatz, insbesondere bei Feuerwehrfahrzeugen, kann es vorkommen, dass das Abdeckelement 7 beschädigt wird bzw. in seiner Transparenz beeinträchtigt wird. Daher ist es von Vorteil, wenn dieses einfach und schnell ausgetauscht werden kann, ohne dabei jedoch die flüssigkeitsdichte Abdichtung des ersten Leuchtmoduls 3 zu gefährden. Dazu ist das Abdeckelement 7 mittels einer Klemmverbindung 19 und einem Klemmmittel 20 mit dem Profilteil 18 verbunden. Insbesondere umfasst das erste Leuchtmodul 3 die Tragstruktur 9, die darauf angeordneten, ersten Leuchtelemente 6 sowie das Abdeckelement 7.

Durch die Anordnung der ersten Leuchtelemente 6 auf der Tragstruktur 9 ergibt es sich, dass die Hauptstrahlrichtung 10 der einzelnen ersten Leuchtelemente 6 jeweils einen anderen Teilbereich des ersten Raumabschnitts 11 beleuchtet. Die Haupstrahlrichtungen 10 sind nicht parallel zueinander.

Da auch das zweite Leuchtelement 8 des zweiten Leuchtmoduls 5 durch ein Halbleiterbauteil gebildet ist, welches seine elektromagnetische Strahlung bevorzugt in eine Hauptstrahlrichtung 21 abgibt, wird zusammen mit der Anordnung des zweiten Leuchtmoduls 5 in einem oberen Abschnitt 22 des Profilteils 18 eine gleichmäßige und zuverlässige Ausleuchtung des zweiten Raumabschnitts erreicht. Da im Vergleich zum ersten Raumabschnitt die vom zweiten Leuchtmodul 5 zu beleuchtende Fläche deutlich geringer ist und auch zumeist eine geringere Beleuchtungsstärke erforderlich ist, weist das zweite Leuchtmodul zumeist nur ein einzelnes, zweites Leuchtelement 8 auf. Dieses zweite Leuchtelement ist an einem Steg des Profilteils 18 angeordnet, welcher Steg gegenüber einer Vertikalen auf das Profilteil geneigt ist, sodass die Hauptstrahlrichtung 21 des zweiten Leuchtmoduls 5 gegenüber einer Horizontalen leicht nach unten geneigt ist, sodass der überwiegende Teil der vom zweiten Leuchtmodul abgegebenen, elektromagnetischen Strahlung nach unten, auf die Dachtragplatte 17 gelenkt wird. Zum Schutz des Halbleiterbauteils weist das zweite Leuchtmodul 5 eine transparente Abdeckplatte 23 auf, welche gegebenenfalls als Lichtlenkelement ausgebildet sein kann.

Bei einem Einsatzfahrzeug soll der zur Verfügung stehende Platz möglichst optimal ausgenutzt werden, daher erfolgt der Zugriff auf Einsatzgerätschaften bevorzugt über die Seitenwände. Dazu sind die Geräteräume zumeist mit einem Rollladen abgedeckt, wobei die Aufwickelvorrichtung für den Rollladen zumeist im Dachbereich angeordnet ist. Ferner ist das erfindungsgemäße Beleuchtungsmodul 1 bevorzugt am oberen, äußeren Bereich des Aufsatzkastens, insbesondere am Übergang zwischen Dach und Seitenwand angeordnet, wobei in diesem Bereich zumeist auch die Vorrichtungen zur Bedienung bzw. Aufwicklung des Rollladens angeordnet sind, welcher Rollladen bevorzugt die von den Seitenflächen zugänglichen Geräteräume abdeckt. Daher weist das Profilteil 18 nach einer Weiterbildung im unteren Abschnitt 13 eine nach innen gewölbte Ausnehmung 33 auf, wodurch die Aufwickelvorrichtung bzw. Führung des Rollladens sich an diese Ausnehmung anschmiegen kann und somit mehr Platz für die im Rahmengestell angeordneten Geräteräume zur Verfügung steht. Diese Ausnehmung 33 kann bspw. im Wesentlichen kreisförmig ausgebildet sein. Diesbezüglich ist ein extrudiertes Profilteil 18 von Vorteil, da sich derartige Strukturmerkmale bei einem extrudierten Formteil einfach ausbilden lassen. Das Profilteil 18 kann beispielsweise aus einem Nichteisenmaterial, wie Aluminium, gebildet sein, es ist jedoch auch eine Ausbildung aus einem Faserverbundwerkstoff möglich, wobei in diesem Fall gegebenenfalls Einbaukomponenten erforderlich sind, um das erste und zweite Leuchtmodul entsprechend anordnen zu können.

Zur Vereinfachung der Darstellung sind in Fig. 2 nur die wesentlichen Rand- bzw. Hauptstrahlen dargestellt. Die reflektierten bzw. vom Abdeckelement gelenkten Strahlen sind nicht dargestellt.

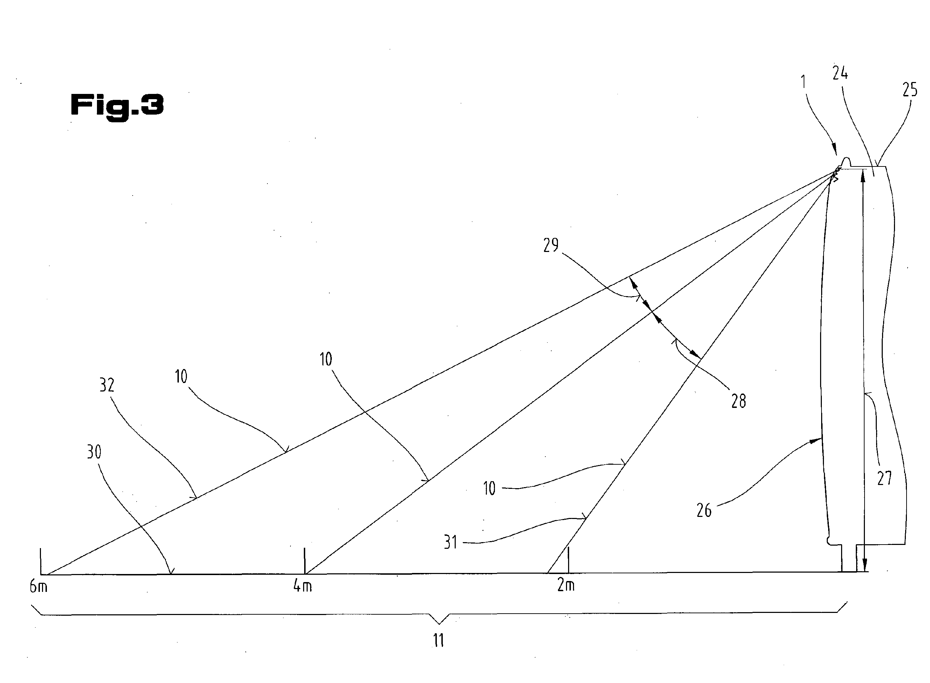

Fig. 3 zeigt eine schematisierte Darstellung der Beleuchtungsverhältnisse im ersten Raumabschnitt 11, der Umgebung eines Einsatzfahrzeugs 24, wobei im Randbereich zwischen Dach 25 und Seitenwand 26, das erfindungsgemäße Beleuchtungsmodul 1 angeordnet ist. Unter Einhaltung von Verkehrsvorschriften wird das Einsatzfahrzeug 24 eine gewisse maximale Bauhöhe 27 aufweisen, wobei die in Fig. 3 dargestellten Verhältnisse für eine Fahrzeughöhe von ca. 3 m gelten. Zur Vereinfachung der Strahlengänge sind in der Fig. 3 nur die Hauptstrahlen 10 der einzelnen, ersten Leuchtelemente des ersten Beleuchtungsmoduls dargestellt. Durch die hoch gelagerte Anordnung des Beleuchtungsmoduls 1 ist es möglich, einen großen Bereich um das Einsatzfahrzeug 24, also einen großen, ersten Raumabschnitt 11 zu beleuchten, gleichzeitig jedoch eine Blendwirkung der Einsatzkräfte zu verringern.

Durch die Anordnung der ersten Leuchtelemente auf der Tragstruktur des ersten Leuchtmoduls wird eine nicht lineare Aufweitung des vom Beleuchtungsmodul in den ersten Raumabschnitt abgegebenen Lichtbündels erreicht. Insbesondere sind die Hauptstrahlen 10 nicht parallel zueinander, so dass der Winkel zwischen den Hauptstrahlen vom fahrzeugnahen Hauptstrahl zum fahrzeugfernen Hauptstrahl abnimmt. Im dargestellten Fall mit drei ersten Beleuchtungsmitteln im ersten Beleuchtungsmodul beträgt der erste Winkel 28 zwischen dem fahrzeugnahen Hauptstrahl und dem Mittelstrahl ca. 17°, der zweite Winkel 29 zwischen dem Mittelstrahl und dem fahrzeugfernen Hauptstrahl beträgt ca. 10°. Diese Winkelangaben sind Richtwerte für eine bevorzugte Ausbildung, tatsächliche Aufweitungswinkel weiterer Ausbildungen können von diesen Angaben abweichen. Mit dieser Ausbildung trifft der fahrzeugnahe Hauptstrahl in einem Horizontalabstand vom Einsatzfahrzeug 24 von ca. 2 m und einem Winkel von ca. 54° auf die Grundfläche 30 auf. Der Mittelstrahl trifft ca. bei einem Horizontalabstand von ca. 4 m unter einem Winkel von ca. 37° auf die Grundfläche auf und der fahrzeugferne Hauptstrahl trifft bei einem Horizontalabstand von ca. 6 m und einem Winkel von ca. 27° auf die Grundfläche auf. Somit kann also ein Bereich bis zu ca. 6 m Horizontalentfernung vom Einsatzfahrzeug ausgeleuchtet werden, wobei diese Entfernung nur auf die Hauptstrahlen bezogen ist. Durch die Strahllenkung des Abdeckelements wird dieser Bereich noch größer sein, allerdings wird mit zunehmendem Horizontalabstand die Beleuchtungsstärke abnehmen. Durch eine entsprechende Ausbildung der Tragstruktur des ersten Leuchtmoduls können gegebenenfalls mehrere erste Leuchtelemente vorhanden sein, wodurch sich beispielsweise die Beleuchtungsstärke im ersten Raumabschnitt 11 erhöhen lässt und ferner auch eine homogenere Ausleuchtung möglich ist.

Die in Figur 3 dargestellten Verhältnis und angegebenen Maßzahlen sind nur als Beispiel einer möglichen Ausbildung zu sehen. Durch entsprechende Gestaltung der Tragstruktur und der Ausbildung der ersten Leuchtelemente, lässt sich bei einer vorgegebenen Fahrzeughöhe der zu beleuchtende erste Raumabschnitt in weiten Bereichen variieren. Insbesondere werden die angegebenen Maßzahlen direkt von der Fahrzeughöhe abhängen.
Der Vorteil des erfindungsgemäßen Beleuchtungsmoduls liegt nun darin, dass durch die Verwendung der Halbleiterbauteile, insbesondere Leuchtdioden, als erste und zweite Leuchtelemente weitestgehend punktförmige Lichtquellen mit einer hohen Leuchtdichte zum Einsatz kommen, die sich somit sehr gut zur Beleuchtung des ersten und zweiten Raumabschnitts lenken lassen und somit eine gute Ausleuchtung möglich ist. Von besonderem Vorteil ist insbesondere, dass Halbleiterbauteile einen hohen Wirkungsgrad aufweisen und unmittelbar nach dem Einschalten bereits die maximale Helligkeit abgeben und diese ferner nicht von der Umgebungstemperatur abhängig ist, wie dies beispielsweise bei bekannten Leuchtstoffröhren der Fall ist. Auch weisen Halbleiterbauteile eine wesentlich geringere Bauteilhöhe auf, sodass das Beleuchtungsmodul deutlich kompakter ausgebildet werden kann, was wiederum für die möglichst optimale Ausnützung des zur Verfügung stehenden Platzes bei Einsatzfahrzeugen von besonderer Bedeutung ist. Durch die Anordnung zweier Beleuchtungsmodule lassen sich beide Raumbereich optimal angepasst beleuchten, insbesondere sind im Gegensatz zu einem Leuchtmittel mit der dann erforderlichen Lichtlenkung keine Kompromisse zur Beleuchtung der beiden Raumabschnitte einzugehen. Ferner ist mit Halbleiterbauteilen auch die Anpassung der Lichtfarbe möglich, so dass diese auf die Einsatzverhältnisse angepasst werden kann.

Die Ausführungsbeispiele zeigen mögliche Ausführungsvarianten des Beleuchtungsmoduls wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang der Ansprüche mit umfasst.

Der Ordnung halber sei abschließend darauf hingewiesen, dass zum besseren Verständnis des Aufbaus des Beleuchtungsmoduls diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1 bis 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Beleuchtungsmodul
- 2: Erster Aufnahmebereich
- 3: Erstes Leuchtmodul
- 4: Zweiter Aufnahmebereich
- 5: Zweites Leuchtmodul

- 6: Erstes Leuchtelement
- 7: Abdeckelement
- 8: Zweites Leuchtelement
- 9: Tragstruktur
- 10: Hauptstrahlrichtung

- 11: Erster Raumabschnitt
- 12: Zweiter Raumabschnitt
- 13: Unterer Abschnitt
- 14: Montageabschnitt
- 15: Dichtungselement

- 16: Aufnahmevorrichtung
- 17: Plattenförmiges Bauteil, Dachtragplatte
- 18: Profilteil
- 19: Klemmverbindung
- 20: Klemmmittel

- 21: Hauptstrahlrichtung
- 22: Oberer Abschnitt
- 23: Transparente Abdeckplatte
- 24: Einsatzfahrzeug
- 25: Dach

- 26: Seitenwand
- 27: Bauhöhe
- 28: Erster Winkel
- 29: Zweiter Winkel
- 30: Grundfläche, Horizontale

- 31: Profilteilnaher Hauptstrahl
- 32: Profilteilferner Hauptstrahl
- 33: Einbuchtung, Ausnehmung

## Patentansprüche

1. Einsatzfahrzeug (24) mit einem Beleuchtungsmodul (1), welches Beleuchtungsmodul (1) im Außenbereich und im Bereich der Dachkante des Einsatzfahrzeuges (24) angeordnet ist,
wobei das Einsatzfahrzeug (24) durch ein Feuerwehrfahrzeug gebildet ist,
wobei das Beleuchtungsmodul (1) ein Profilteil (18) und ein erstes (3) und zweites (5) Leuchtmodul umfasst,
wobei das erste Leuchtmodul (3) in einem ersten Aufnahmebereich (2) des Profilteils (18) angeordnet ist und ein fahrzeugnahes Umfeld des Einsatzfahrzeuges (24) als einen ersten Raumabschnitt (11) beleuchtet,
wobei das zweite Leuchtmodul (5) in einem zweiten Aufnahmebereich (4) des Profilteils (18) angeordnet ist und einen Dachabschnitt des Einsatzfahrzeuges (24) als einen zweiten Raumabschnitt (12) beleuchtet,
**dadurch gekennzeichnet, dass**
das erste Leuchtmodul (3) zumindest zwei erste Leuchtelemente (6) zur Abgabe elektromagnetischer Strahlung und ein transparentes Abdeckelement (7) aufweist, wobei das erste Leuchtelement (6) aus einem Halbleiterbauteil gebildet ist und auf einer Tragstruktur (9) angeordnet ist
und wobei jedes erste Leuchtelement (6) das Maximum der elektromagnetischen Strahlung in eine Hauptstrahlrichtung (10) abgibt, wobei die Hauptstrahlrichtungen einen Winkel (28, 29) zueinander einschießen, wodurch jedes erste Leuchtelement (6) einen Teilbereich des ersten Raumabschnitts beleuchtet,
und wobei ferner das zweite Leuchtmodul (5) ein zweites Leuchtelement (8) aus einem Halbleiterbauteil zur Abgabe elektromagnetischer Strahlung aufweist.

2. Einsatzfahrzeug nach Anspruch 1, **dadurch gekennzeichnet, dass** das zweite Leuchtmodul (5) in einem oberen Randabschnitt (22) des Profilteils (18) angeordnet ist.

3. Einsatzfahrzeug nach einem der Ansprüche 1 oder 2, **dadurch gekennzeichnet, dass** die Tragstruktur (9) zumindest abschnittsweise reflektierend ausgebildet ist.

4. Einsatzfahrzeug nach einem der Ansprüche 1 bis 3, **dadurch gekennzeichnet, dass** das Abdeckelement (7) als Lichtlenkelement ausgebildet ist.

5. Einsatzfahrzeug nach einem der Ansprüche 1 bis 4, **dadurch gekennzeichnet, dass** im Bezug zu einer Horizontalen (30) auf das Profilteil, der profilteilnahe Hauptstrahl (31) die Horizontale (30) in einem Winkel zwischen 50° und 65° schneidet und der profilteilferne Hauptstrahl (32) die Horizontale (30) in einem Winkel zwischen 10° und 30° schneidet.

6. Einsatzfahrzeug nach einem der Ansprüche 1 bis 5, **dadurch gekennzeichnet, dass** das Abdeckelement (7) mittels einer Klemmverbindung (19) und ferner einem Klemmmittel (20) mit dem Profilteil verbunden ist.

7. Einsatzfahrzeug nach einem der Ansprüche 1 bis 6, **dadurch gekennzeichnet, dass** das erste (6) und/oder zweite (8) Leuchtelement streifenförmig ausgebildet ist.

8. Einsatzfahrzeug nach einem der Ansprüche 1 bis 7, **dadurch gekennzeichnet, dass** das Profilteil (18) in einem unteren Abschnitt (13) eine nutförmige Aufnahmevorrichtung (16) für ein plattenförmiges Bauteil (17) aufweist.

9. Einsatzfahrzeug nach einem der Ansprüche 1 bis 8, **dadurch gekennzeichnet, dass** das Profilteil (18) im unteren Abschnitt (13) einen Montageabschnitt (14) mit zumindest einem Befestigungsmittel aufweist.

10. Einsatzfahrzeug nach einem der Ansprüche 1 bis 9, **dadurch gekennzeichnet, dass** da Profilteil (18) als extrudiertes Hohlkammerprofil ausgebildet ist.

11. Einsatzfahrzeug nach einem der Ansprüche 1 bis 10, **dadurch gekennzeichnet, dass** das Profilteil (18) eine Aufnahme für ein verschwenkbares Sicherheitselement aufweist.

12. Einsatzfahrzeug nach einem der Ansprüche 1 bis 11, **dadurch gekennzeichnet, dass** das Profilteil (18) eine Aufnahmevorrichtung für ein Abdeckelement aufweist.

## Claims

1. Emergency service vehicle (24) having a lighting module (1), which lighting module (1) is arranged outside and in the region of the roof edge of the emergency service vehicle 24, with the emergency service vehicle (24) being embodied as a fire engine, with the lighting module (1) comprising a profiled part (18), a first (3) and a second (5) lighting module, with the first lighting module (3) being arranged in a first accommodating area (2) of the profiled part (18) and illuminating a surrounding near the emergency service vehicle (24) as a first spatial section (11), with the second lighting module (5) being arranged in a second accommodating area (4) of the profiled part (18) and illuminating a roof section of the emergency service vehicle (24) as a second spatial section (12), **characterized in that** the first lighting module (3) comprises at least two first lighting elements (6) for emitting electromagnetic radiation and a transparent covering element (7), with the first lighting element (6) being formed from a semiconductor component and being arranged on a support structure (9)
and each first lighting element (6) emits the maximum of the electromagnetic radiation in a main beam direction (10), with the main beam directions limiting an angle (28, 29) towards one another, with the result that each first lighting element (6) illuminates a section of the first spatial section,
and furthermore, the second lighting module (5) comprises a second lighting element (8) made of a semiconductor component for emitting electromagnetic radiation.

2. Emergency service vehicle according to claim 1, **characterized in that** the second lighting module (5) is disposed in an upper edge section (22) of the profiled part (18).

3. Emergency service vehicle according to one of claims 1 or 2, **characterized in that** at least sections of the support structure (9) are embodied to be reflective.

4. Emergency service vehicle according to one of the claims 1 to 3, **characterized in that** the covering element (7) is embodied as a light-directing element.

5. Emergency service vehicle according to one of claims 1 to 4, **characterized in that**, with respect to a horizontal (30) towards the profiled part, the main beam (31) near the profiled part intersects the horizontal (3) at an angle between 50° and 65° and the main beam (32) distant from the profiled part intersects the horizontal (30) at an angle between 10° and 30°.

6. Emergency service vehicle according to one of claims 1 to 5, **characterized in that** the covering element (7) is connected to the profiled part via a clamping connection (19) and furthermore a clamping means (20).

7. Emergency service vehicle according to one of claims 1 to 6, **characterized in that** the first (6) and/or the second (8) lighting element is embodied to be strip-shaped.

8. Emergency service vehicle according to one of claims 1 to 7, **characterized in that** the profiled part (18) in a lower section (13) has a groove-shaped mounting device (16) for a plate-shaped component (17).

9. Emergency service vehicle according to one of the claims 1 to 8, **characterized in that** the profiled part (18) in the lower section (13) has a mounting section (14) including at least one fastening means.

10. Emergency service vehicle according to one of claims 1 to 9, **characterized in that** the profiled part (18) is embodied as an extruded hollow-chamber profile.

11. Emergency service vehicle according to one of claims 1 to 10, **characterized in that** the profiled part (18) has a mounting for a pivotable safety element.

12. Emergency service vehicle according to one of claims 1 to 11, **characterized in that** the profiled part (18) includes a mounting device for a covering element.

## Revendications

1. Véhicule d'intervention (24) avec un module d'éclairage (1), le module d'éclairage (1) étant disposé à l'extérieur et au niveau du bord du toit du véhicule d'intervention (24), le véhicule d'intervention (24) étant un véhicule de pompiers,
le module d'éclairage (1) comprenant une partie profilée (18) et un premier (3) et un deuxième (5) module lumineux,
le premier module lumineux (3) étant disposé dans un premier logement (2) de la partie profilée (18) et éclairant un environnement proche du véhicule d'intervention (24), en tant que première partie de l'espace (11),
le deuxième module lumineux (5) étant disposé dans un deuxième logement (4) de la partie profilée (18) et éclairant une partie du toit du véhicule d'intervention (24) en tant que deuxième partie de l'espace (12),
**caractérisé en ce que**
le premier module lumineux (3) comprend au moins deux premiers éléments lumineux (6) pour l'émission d'un rayonnement électromagnétique et un élément de protection transparent (7), le premier élément lumineux (6) étant constitué d'un composant semi-conducteur et étant disposé sur une structure porteuse (9),
et chaque premier élément lumineux (6) émettant le maximum du rayonnement électromagnétique dans une direction principale de rayonnement (10), les directions principales de rayonnement formant un angle (28, 29) entre elles, chaque premier élément lumineux (6) éclairant donc une zone partielle de la première partie de l'espace,
et, en outre, le deuxième module lumineux (5) comprenant un deuxième élément lumineux (8) constitué d'un composant semi-conducteur pour l'émission d'un rayonnement électromagnétique.

2. Véhicule d'intervention selon la revendication 1, **caractérisé en ce que** le deuxième module lumineux (5) est disposé dans une partie de bord supérieure (22) de la partie profilée (18).

3. Véhicule d'intervention selon l'une des revendications 1 ou 2, **caractérisé en ce que** la structure porteuse (9) est au moins partiellement réfléchissante.

4. Véhicule d'intervention selon l'une des revendications 1 à 3, **caractérisé en ce que** l'élément de protection (7) est conçu comme un élément de déviation de lumière.

5. Véhicule d'intervention selon l'une des revendications 1 à 4, **caractérisé en ce que**, par rapport à une horizontale (30) sur la partie profilée, le rayon principal (31), proche de la partie profilée, coupe l'horizontale (30) avec un angle de 50° à 65° et le rayon principal (32), éloigné de la partie profilée, coupe l'horizontale (30) avec un angle de 10° à 30°.

6. Véhicule d'intervention selon l'une des revendications 1 à 5, **caractérisé en ce que** l'élément de protection (7) est relié à la partie profilée à l'aide d'une liaison par serrage (19) et en outre un moyen de serrage (20).

7. Véhicule d'intervention selon l'une des revendications 1 à 6, **caractérisé en ce que** le premier (6) et/ou le deuxième (8) élément lumineux est conçu sous la forme d'une bande.

8. Véhicule d'intervention selon l'une des revendications 1 à 7, **caractérisé en ce que** la partie profilée (18) comprend, dans une portion inférieure (13), un dispositif de logement (16) en forme de rainure pour un composant (17) en forme de plaque.

9. Véhicule d'intervention selon l'une des revendications 1 à 8, **caractérisé en ce que** la partie profilée (18) comprend, dans la portion inférieure (13), une portion de montage (14) avec au moins un moyen de fixation.

10. Véhicule d'intervention selon l'une des revendications 1 à 9, **caractérisé en ce que** la partie profilée (18) est conçue comme un profilé creux extrudé.

11. Véhicule d'intervention selon l'une des revendications 1 à 10, **caractérisé en ce que** la partie profilée (18) comprend un logement pour un élément de sécurité pivotant.

12. Véhicule d'intervention selon l'une des revendications 1 à 11, **caractérisé en ce que** la partie profilée (18) comprend un dispositif de logement pour un élément de protection.
